# NEUE EUROPÄISCHE PATENTSCHRIFT

(11) **EP 1 877 459 B2**
(45) Veröffentlichungstag und Bekanntmachung des Hinweises auf die Entscheidung über den Einspruch: **14.06.2017**
(45) Hinweis auf die Patenterteilung: 21.10.2009
(21) Anmeldenummer: 06763062.4
(22) Anmeldetag: 28.04.2006
(51) Int. Cl.: C08G 18/10, C08L 101/10, C09J 175/04, C09D 175/04

(54) **FEUCHTIGKEITSHÄRTENDE ZUSAMMENSETZUNG MIT ERHÖHTER DEHNBARKEIT**
MOISTURE-CURABLE COMPOSITION FEATURING INCREASED ELASTICITY
COMPOSITION DURCISSANT A L'HUMIDITE PRESENTANT UNE EXPANSIBILITE ACCRUE

(30) Priorität: 29.04.2005 EP 05103564
(43) Veröffentlichungstag der Anmeldung: 16.01.2008
(73) Patentinhaber: SIKA TECHNOLOGY AG, CH-6340 Baar (CH)
(72) Erfinder: JUCKER, Barbara, CH-8057 Zürich (CH); BÜTIKOFER, Pierre-André, CH-8304 Wallisellen (CH); BURCKHARDT, Urs, CH-8057 Zürich (CH); PFENNINGER, Ueli, CH-8804 Au (CH)
(74) Vertreter: Sika Patent Attorneys
(86) Internationale Anmeldenummer: PCT/EP2006/061915
(87) Internationale Veröffentlichungsnummer: WO 2006/117338

(56) Entgegenhaltungen:
- EP-A- 0 459 300
- EP-A- 1 529 813
- WO-A-03/014226

## Beschreibung

### Technisches Gebiet

Feuchtigkeitshärtende Zusammensetzung mit guten mechanischen Eigenschaften und guten Haftungseigenschaften, enthaltend mindestens ein silanfunktionelles Polymer und mindestens ein α-funktionelles Organodialkoxysilan, geeignet als elastischer Klebstoff, als elastische Dichtmasse oder Beschichtung.

### Stand der Technik

Feuchtigkeitshärtende Zusammensetzungen auf der Basis von silanfunktionellen Polymeren sind bekannt und werden unter anderem als elastische Klebstoffe, Dichtmassen und Beschichtungen eingesetzt, welche frei von potentiell gesundheitsschädlichen Isocyanatgruppen sind. Für die meisten dieser Anwendungen, beispielsweise als Fugendichtmasse oder als Montageklebstoff, ist es entscheidend, dass die Zusammensetzung im ausgehärteten Zustand über gute mechanische Eigenschaften und gute Haftungseigenschaften verfügt. Insbesondere wichtig ist eine gute Dehnbarkeit bei gleichzeitig hoher Reissfestigkeit. Diesen Anforderungen genügen solche Zusammensetzungen oft nicht.

Die Verwendung von Organoalkoxysilanen als Additive in feuchtigkeitshärtenden Zusammensetzungen auf der Basis von silanfunktionellen Polymeren ist bekannt. Sie werden üblicherweise eingesetzt, um Eigenschaften wie Haftung, Lagerstabilität und Reaktivität gezielt zu beeinflussen, wie beispielsweise beschrieben in US 3,979,344, US 5,147,927 und EP 0 819 749 A2. Bekannt ist beispielsweise die Verwendung von N-(2-Aminoethyl)-3-aminopropyl-trimethoxysilan zur Erreichung guter Haftungseigenschaften, beispielsweise aus US 3,979,344.

WO 03/014226 A1 beschreibt alkoxyvemetzende einkomponentige Dichtstoffmassen auf der Basis von Alkoxyorganosilan-terminierten Polymeren mit guter Lagerstabilität und Härtungscharakteristik, wobei den Dichtstoffmassen Organoalkoxysilane aus einer breiten Palette von α-funktionellen Silanen in relativ hohen Mengen als Trocknungsmittel zugesetzt werden.

### Darstellung der Erfindung

Aufgrund des Standes der Technik besteht Bedarf nach einer isocyanatfreien feuchtigkeitshärtenden Zusammensetzung, welche eine erhöhte Dehnbarkeit bei gleichzeitig hoher Reaktivität, guten Haftungseigenschaften und hoher Reissfestigkeit aufweist.

Ueberraschenderweise wurde gefunden, dass feuchtigkeitshärtende Zusammensetzungen nach Anspruch 1, enthaltend gewisse silanfunktionelle Polymere, und enthaltend mindestens ein Aminosilan als Beschleuniger und Haftvermittler, durch die Mitverwendung bestimmter Mengen an gewissen α -funktionellen Organodialkoxysilanen eine deutlich erhöhte Dehnbarkeit im ausgehärteten Zustand aufweisen, bei gleichbleibend guter Reaktivität, Reissfestigkeit und Haftung.

Die Erfahrung zeigt, dass feuchtigkeitshärtende Zusammensetzungen enthaltend silanfunktionelle Polymere durch die Mitverwendung von Aminosilanen wie N-(2-Aminoethyl)-3-aminopropyl-trimethoxysilan in ihren Haftungseigenschaften wesentlich verbessert werden. Leider führt die Anwesenheit von Aminosilanen, wie beispielsweise N-(2-Aminoethyl)-3-aminopropyl-trimethoxysilan, zu unerwünschten Einbussen bei der Dehnbarkeit der ausgehärteten Zusammensetzung. Wird hingegen eine Kombination aus einem Aminosilan, wie beispielsweise N-(2-Aminoethyl)-3-aminopropyl-trimethoxysilan, und einer bestimmten Menge an gewissen α-funktionellen Organodialkoxysilanen in feuchtigkeitshärtenden Zusammensetzungen enthaltend gewisse silanfunktionelle Polymere eingesetzt, so sind isocyanatfreie feuchtigkeitshärtende Zusammensetzungen mit hoher Reaktivität, guten Haftungseigenschaften, hohen Zugfestigkeiten und deutlich erhöhter Dehnbarkeit erhältlich.

### Wege zur Ausführung der Erfindung

Gegenstand der Erfindung sind feuchtigkeitshärtende Zusammensetzungen wie in Anspruch 1 definiert mit erhöhter Dehnbarkeit, geeignet als elastischer Klebstoff, als elastische Dichtmasse oder Beschichtung.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst im weiteren auch sogenannte Prepolymere, das heisst reaktive oligomere Voraddukte, deren funktionelle Gruppen am Aufbau von Makromolekülen beteiligt sind.

Der Begriff "Polyurethanpolymer" umfasst sämtliche Polymere, welche nach dem Diisocyanat-Polyadditions-Verfahren hergestellt werden. Dies schliesst auch solche Polymere ein, die nahezu oder gänzlich frei sind von Urethangruppen, wie Polyether-Polyurethane, Polyester-Polyurethane, Polyether-Polyhamstoffe, Polyharnstoffe, Polyester-Polyhamstoffe, Polyisocyanurate, Polycarbodiimide, usw.

Mit dem Begriff "Organoalkoxysilan" oder kurz "Silan" werden im vorliegenden Dokument Verbindungen bezeichnet, in denen zum einen mindestens eine, üblicherweise zwei oder drei Alkoxygruppen direkt an das Silicium-Atom gebunden sind (über eine Si-O-Bindung), und die zum anderen mindestens einen direkt an das Silicium-Atom (über eine Si-C-Bindung) gebundenen organischen Rest aufweisen. Entsprechend dazu bezeichnet der Begriff "Silangruppe" die an den organischen Rest des Organoalkoxysilans gebundene Silicium-haltige Gruppe. Die Organoalkoxysilane, beziehungsweise deren Silangruppen, haben die Eigenschaft, bei Kontakt mit Feuchtigkeit zu hydrolysieren. Dabei bilden sich Organosilanole, das heisst Silicium-organische Verbindungen enthaltend eine oder mehrere Silanolgruppen (Si-OH-Gruppen) und, durch nachfolgende Kondensationsreaktionen, Organosiloxane, das heisst Silicium-organische Verbindungen enthaltend eine oder mehrere Siloxangruppen (Si-O-Si-Gruppen).

Der Begriff "α-funkdonelles Organodialkoxysilan" bezeichnet ein Silan wie in Formel (I) dargestellt, welches am Silicium sowohl eine Methylengruppe als auch zwei Alkoxygruppen trägt, wobei die Methylengruppe eine funktionelle Gruppe trägt, welche also in α-Stellung zum Siliciumatom steht. Als "γ-funktionell" werden Silane bezeichnet, die am organischen Rest in γ-Stellung zum Siliciumatom eine funktionelle Gruppe tragen.

Mit Begriffen wie "Aminosilan" und "Isocyanatosilan" werden Silane bezeichnet, welche die entsprechende funktionelle Gruppe aufweisen, hier also Aminoalkylalkoxysilane und Isocyanatoalkylalkoxysilane.

Mit dem Begriff "silanfunktionell" werden Verbindungen, insbesondere Polymere, bezeichnet, welche Silangruppen aufweisen.

Die feuchtigkeitshärtende Zusammensetzung enthält mindestens ein Silan der Formel (I) in einer Menge von 0.6 - 5.0 Gewichtsteilen, bevorzugt 0.6 - 3.5 Gewichtsteilen, bezogen auf 100 Gewichtsteile Polymer **A,** 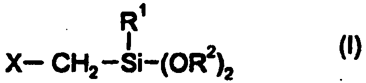 wobei
R¹ für eine Alkylgruppe mit 1 bis 8 C-Atomen, insbesondere für eine Methyl- oder für eine Ethylgruppe, steht,
R² für eine Alkylgruppe mit 1 bis 5 C-Atomen, insbesondere für eine Methylgruppe oder für eine Ethylgruppe oder für eine Isopropylgruppe, steht, und
X für einen über ein Heteroatom gebundenen Rest steht, ausgewählt aus der Gruppe umfassend -NHR³, -NHCOOR⁴, -SH, -OR⁴, R⁴COO-, CH₂=C(CH₃)COO- und CH₂=CHCOO-, wobei
R³ für ein Wasserstoffatom oder für einen linearen oder verzweigten Kohlenwasserstoffrest mit 1 bis 20 C-Atomen, welcher gegebenenfalls cyclische Anteile aufweist, oder für einen Rest der Formel (II) steht, 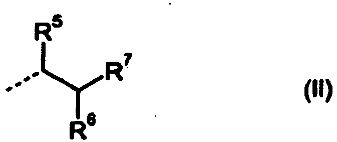 wobei
   R⁵ und R⁶, unabhängig voneinander, für ein Wasserstoffatom oder für einen Rest aus der Gruppe umfassend R⁸, -COOR⁸ und -CN steht, und
   R⁷ für ein Wasserstoffatom oder für einen Rest aus der Gruppe umfassend -CH₂-COOR⁸, -COOR⁸, -CN, -NO₂, -PO(OR⁸)₂, -SO₂R⁸ und -SO₂OR⁸ steht,
      wobei
   R⁸ für einen, gegebenenfalls mindestens ein Heteroatom enthaltenden, Kohlenwasserstoffrest mit 1 bis 20 C-Atomen steht,
   und
R⁴ für einen, gegebenenfalls substituierten, Kohlenwasserstoffrest mit 1 bis 20 C-Atomen steht.

Gestrichelte Linien in den Formeln bezeichnen jeweils die Verbindungsstellen.

Bevorzugt sind die folgenden Silane (I):
N-Phenyl-aminomethyl-dimethoxymethylsilan, N-Cyclohexyl-aminomethyl-dimethoxymethylsilan, N-Methyl-aminomethyl-dimethoxymethylsilan, N-Ethyl-aminomethyl-dimethoxymethylsilan, N-Propyl-aminomethyl-dimethoxymethylsilan, N-Butyl-aminomethyl-dimethoxymethylsilan, (Methacryloxymethyl)-dimethoxymethylsilan, N-(Dimethoxymethyl-silylmethyl)-O-methyl-carbamat, die Produkte aus der Michael-artigen Addition von Aminomethyl-dimethoxymethylsilan an Michael-Akzeptoren wie Maleinsäurediester, Fumarsäurediester, Citraconsäurediester, Acrylsäureester, Methacrylsäureester, Zimtsäureester, Itaconsäurediester, Vinylphosphonsäurediester, Vinylsulfonsäurearylester, Vinylsulfone, Vinylnitrile, 1-Nitroethylene oder Knoevenagel-Kondensationsprodukte wie beispielsweise solche aus Malonsäurediestem und Aldehyden wie Formaldehyd, Acetaldehyd oder Benzaldehyd.

Einige der bevorzugten Silane (I) sind kommerziell erhältlich. Die Michael-artigen Additionsprodukte lassen sich unter den in US 5,364,955 für γ-funktionelle Aminosilane beschriebenen Reaktionsbedingungen auf einfache Weise herstellen.

Die feuchtigkeitshärtende Zusammensetzung enthält weiterhin mindestens ein Aminosilan **AS2**. Dieses bewirkt eine beschleunigte Aushärtung der Zusammensetzung und verbessert deren Haftungseigenschaften im ausgehärteten Zustand. Es wurde gefunden, dass dies insbesondere dadurch erreicht wird, dass das Aminosilan **AS2** im Bereich von 0.1 - 5 Gewichts-%, bevorzugt 0.3 - 3 Gewichts-%, bezogen auf die gesamte Zusammensetzung, eingesetzt wird. Es ist vorteilhaft, nur soviel Aminosilan **AS2** zu verwenden, wie zur Erreichung optimale Haftungseigenschaften nötig ist, da festgestellt wurde, dass das Aminosilan **AS2** in grösserer Menge die Dehnbarkeit der ausgehärteten Zusammensetzung herabsetzen kann. Bezogen auf 100 Gewichtsteile Polymer **A** liegt das Aminosilan **AS2** üblicherweise in einer Menge von 0.3 bis 10 Gewichtsteilen vor.

Geeignete Aminosilane **AS2** sind Aminosilane mit mindestens einer primären Aminogruppe (NH₂-Gruppe), wie beispielsweise 3-Aminopropylsilane und deren Derivate. Als Aminosilane **AS2** besonders geeignet sind sogenannte Diaminosilane, welche zwei Aminogruppen aufweisen, bevorzugt solche, welche eine primäre Aminogruppe und in γ-Stellung zum Siliciumatom eine sekundäre Aminogruppe (NH-Gruppe) tragen, wie beispielsweise N-(2-Aminoethyl)-3-aminopropyl-silane. Besonders bevorzugt sind N-(2-Aminoethyl)-3-aminopropyl-trimethoxysilan und N-(2-Aminoethyl)-3-aminopropyl-triethoxysilan.

Die feuchtigkeitshärtende Zusammensetzung enthält weiterhin mindestens ein silanfunktionelles Polymer **A**. Das silanfunktionelle Polymer **A** ist ein silanfunktionelles Polyurethanpolymer **A1**, welches erhältlich ist durch die Umsetzung eines Aminosilans **AS1** mit einem Isocyanatgruppen enthaltenden Polyurethanpolymeren. Diese Umsetzung wird bevorzugt im stöchiometrischen Verhältnis zwischen Aminogruppen und Isocyanatgruppen oder mit einem leichten Ueberschuss an Aminogruppen durchgeführt, so dass das resultierende silanfunktionelle Polyurethanpolymer **A1** gänzlich frei von Isocyanatgruppen ist.

Als Aminosilane **AS1** zur Herstellung eines solchen Polymers **A1** werden Verbindungen der Formel (III) verwendet 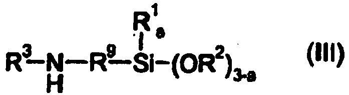 wobei
R¹, R² und R³ die bereits beschriebene Bedeutung aufweisen,
a für 0 oder 1 steht, und
R⁹ für eine lineare oder verzweigte, gegebenenfalls acyclische, Alkylengruppe mit 2 bis 12 C-Atomen, gegebenenfalls mit aromatischen Anteilen, und gegebenenfalls mit einem oder mehreren Heteroatomen, insbesondere Stickstoffatomen, steht.

Beispiele für geeignete Aminosilane **AS1** sind 3-Aminopropyl-trimethoxysilan, 3-Aminopropyl-dimethoxymethylsilan, N-Butyl-3-aminopropyl-trimethoxysilan, N-Phenyl-3-aminopropyl-trimethoxysilan, die Produkte aus der Michael-artigen Addition von 3-Aminopropyl-trimethoxysilan oder 3-Aminopropyl-dimethoxymethylsilan an Michaelakzeptoren wie Acrylnitril, Acryl- und Methacrylsäureestern, Maleinsäure- und Fumarsäurediestern, Citraconsäurediestem und Itaconsäurediestem, beispielsweise N-(3-Trimethoxysilyl-propyl)-amino-bernsteinsäuredimethyl- und -diethylester, sowie die genannten Silane mit Ethoxy- anstelle der Methoxygruppen am Silicium. Besonders geeignet sind Aminosilane **AS1** mit einer sekundären Aminogruppe. Bevorzugt sind die Michael-artigen Additionsprodukte, insbesondere N-(3-Trimethoxysilyl-propyl)-amino-bernsteinsäurediethylester.

Als Isocyanatgruppen enthaltendes Polyurethanpolymer zur Herstellung eines silanfunktionellen Polyurethanpolymers **A1** eignen sich Polymere, welche erhältlich sind durch die Umsetzung von mindestens einem Polyisocyanat mit mindestens einem Polyol.

Diese Umsetzung kann dadurch erfolgen, dass das Polyol und das Polyisocyanat mit üblichen Verfahren, beispielsweise bei Temperaturen von 50 °C bis 100 °C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind. Der Überschuss an Polyisocyanat wird so gewählt, dass im resultierenden Polyurethanpolymer nach der Umsetzung aller Hydroxylgruppen des Polyols ein Gehalt an freien Isocyanatgruppen von 0.1 - 5 Gewichts-%, bevorzugt 0.25 - 2.5 Gewichts-%, besonders bevorzugt 0.3 - 1 Gewichts-%, bezogen auf das gesamte Polymer, verbleibt. Gegebenenfalls kann das Polyurethanpolymer unter Mitverwendung von Weichmachern hergestellt werden, wobei die verwendeten Weichmacher keine gegenüber Isocyanaten reaktive Gruppen enthalten.

Bevorzugt sind Polyurethanpolymere mit dem genannten Gehalt an freien Isocyanatgruppen, welche aus der Umsetzung von Diisocyanaten mit hochmolekularen Diolen in einem NCO/OH-Verhältnis von 1.5/1 bis 2/1 erhalten werden.

Als Polyole für die Herstellung eines Isocyanatgruppen enthaltenden Polyurethanpolymers können beispielsweise die folgenden handelsüblichen Polyole oder beliebige Mischungen davon eingesetzt werden:
- Polyoxyalkylenpolyole, auch Polyetherpolyole genannt, welche Polymerisationsprodukte von Ethylenoxid, 1,2-Propylenoxid, 1,2- oder 2,3-Butylenoxid, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2-und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol-A, hydriertes Bisphenol-A, 1,1,1-Trimethylolethan, 1,1,1-Trimethylolpropan, Glycerin, Anilin sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH oder Alkalialkoholaten;
- Polyester-, Polyacrylat- und Polymethacrylatpolyole.

Diese genannten Polyole weisen ein mittleres Molekulargewicht von 250 bis 30'000 g/mol und eine mittlere OH-Funktionalität im Bereich von 1.6 bis 3 auf. Unter "Molekulargewicht" oder "Molgewicht" versteht man im vorliegenden Dokument stets das Molekulargewichtsmittel Mₙ.

Besonders geeignet sind Polyoxyalkylendiole, insbesondere Polyoxypropylendiole.

Speziell geeignet sind hochmolekulare Polyoxypropylendiole mit einem Ungesättigtheitsgrad tiefer als 0.02 mEq/g und mit einem Molekulargewicht im Bereich von 4'000 bis 30'000 g/mol, insbesondere solche mit einem Molekulargewicht im Bereich von 8'000 bis 20'000 g/mol.

Für die Herstellung eines Isocyanatgruppen enthaltenden Polyurethanpolymers werden handelsübliche Polyisocyanate verwendet. Beispiele für geeignete Polyisocyanate sind 2,4- und 2,6-Toluylendiisocyanat (TDI) und beliebige Gemische dieser Isomeren, 4,4'-, 2,4'- und 2,2'-Diphenylmethandiisocyanat (MDI) und beliebige Gemische dieser und weiterer Isomeren, 1,3- und 1,4-Phenylendiisocyanat, 2,3,5,6-Tetramethyl-1,4-diisocyanatobenzol, 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Cyclohexan-1,3- und -1,4-diisocyanat und beliebige Gemische dieser isomeren, 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI), 1,4-Diisocyanato-2,2,6-trimethylcyclohexan (TMCDI), mund p-Xylylendüsocyanat (XDI), 1,3- und 1,4-Tetramethylxylylendiisocyanat (TMXDI), 1,3- und 1,4-Bis-(isocyanatomethyl)-cyclohexan, Oligomere und Polymere der vorgenannten Isocyanate, sowie beliebige Mischungen der vorgenannten Isocyanate. Bevorzugt sind MDI, TDI, HDI und IPDI.

Es ist nicht bevorzugt, dass das zur Herstellung eines silanfunktionellen Polyurethanpolymers **A1** verwendete Aminosilan **AS1** und das zusätzlich vorhandene Aminosilan **AS2** identisch sind. Als Aminosilan **AS2** sind insbesondere Aminosilane mit einer primären Aminogruppe geeignet, bevorzugt Diaminosilane mit einer primären Aminogruppe und in γ-stellung zum Siliciumatom einer sekundären Aminogruppe, da festgestellt wurde, dass die Verwendung solcher Aminosilane die Haftungseigenschaften der ausgehärteten Zusammensetzung besonders positiv beeinflusst Als Aminosilan **AS1** hingegen sind Aminosilane mit allein einer sekundären Aminogruppe besonders geeignet, da festgestellt wurde, dass unter Verwendung solcher Aminosilane silanfunktionelte Polyurethanpolymere **A1** erhalten werden, welche im allgemeinen dünnflüssiger und im ausgehärteten Zustand weniger spröde sind, als wenn Aminosilane mit primären Aminogruppen zur Herstellung von silanfuktionellen Polyurethanpolymeren **A1** eingesetzt werden.

Als silanfunktionelles Polyurethanpolymer **A1** nicht geeignet sind insbesondere Polymere, wie sie durch die Umsetzung eines Isocyanatosilans mit einem Hydroxylgruppen enthaltenden Polymeren erhalten werden, wie sie beispielsweise in US 4,345,053 beschrieben sind. Feuchtigkeitshärtende Zusammensetzungen, welche solche Polymere und ein N-(2-Aminoethyl)-3-aminopropylsilan enthalten, zeigen keine signifikante Erhöhung der Dehnbarkeit bei der Mitverwendung von Silanen der Formel (I).

Die erfindungsgemässe feuchtigkeitshärtende Zusammensetzung kann zusätzlich zum silanfunktionellen Polymer **A**, dem Aminosilan **AS2** und dem Silan (I) weitere Komponenten enthalten, welche jedoch die Lagerstabilität nicht beeinträchtigen, das heisst während der Lagerung die zur Vernetzung führende Reaktion der in der Zusammensetzung enthaltenen Silangruppen nicht in signifikantem Ausmass auslösen dürfen. Insbesondere bedeutet dies, dass solche weiteren Komponenten kein oder höchstens Spuren von Wasser enthalten dürfen. Als zusätzliche Komponenten können unter anderem die folgenden Hilfs- und Zusatzmittel vorhanden sein:
Weichmacher, beispielsweise Ester organischer Carbonsäuren oder deren Anhydride, wie Phthalate, beispielsweise Dioctylphthalat oder Diisodecylphthalat, Adipate, beispielsweise Dioctyladipat, und Sebacate, Polyole, beispielsweise Polyoxyalkylenpolyole oder Polyesterpolyole, organische Phosphor- und Sulfonsäureester oder Polybutene; Lösemittel; anorganische und organische Füllstoffe, zum Beispiel gemahlene oder gefällte Calciumcarbonate, welche gegebenenfalls mit Stearaten beschichtet sind, insbesondere feinteiliges beschichtetes Calciumcarbonat, Russe, Kaoline, Aluminiumoxide, Kieselsäuren, PVC-Pulver oder Hohlkugeln; Fasern, beispielsweise aus Polyethylen; Pigmente; Katalysatoren, beispielsweise Organozinnverbindungen wie Dibutylzinndilaurat und Dibutylzinndiacetylacetonat, Bismut-organische Verbindungen oder Bismut-Komplexe, aminogruppenhaltige Verbindungen, beispielsweise 1,4-Diazabicyclo[2.2.2]octan und 2,2'-Dimorpholinodiethylether; Rheologie-Modifizierer wie beispielsweise Verdickungsmittel, zum Beispiel Harnstoffverbindungen, Polyamidwachse, Bentonite oder pyrogene Kieselsäuren; weitere Haftvermittler, beispielsweise Epoxysilane; Vernetzer, beispielsweise silanfunktionelle Oligo- und Polymere; Trocknungsmittel, zum Beispiel Vinyltrimethoxysilan, Orthoameisensäureester, Calciumoxid oder Molekularsiebe; Stabitisatoren gegen Wärme, Licht- und UV-Strahlung; flammhemmende Substanzen; oberflächenaktive Substanzen wie beispielsweise Netzmittel, Verlaufsmittel, Entlüftungsmittel oder Entschäumer; Fungizide oder das Pilzwachstum hemmende Substanzen; sowie weitere, in feuchtigkeitshärtenden Zusammensetzungen üblicherweise eingesetzte Substanzen.

Bevorzugt enthält die feuchtigkeitshärtende Zusammensetzung Vinyltrimethoxysilan als Trocknungsmittel. Ein Trocknungsmittel wird eingesetzt, um Spuren von Feuchtigkeit, welche vor allem über Feststoffkomponenten wie Füllstoffe oder Pigmente in die Zusammensetzung gelangen, umzusetzen, bevor diese mit den Silangruppen des Polymers reagieren können. Vinyltrimethoxysilan ist ein effektives und wesentlich kostengünstigeres Trocknungsmittel als die bei WO 03/014226 A1 beschriebenen α-funktionellen Silane. Die Verwendung von Vinyltrimethoxysilan in Kombination mit den silanfunktionellen Polymeren **A** führt zu feuchtigkeitshärtenden Zusammensetzungen mit besonders guter Lagerstabilität.

In einer bevorzugten Ausführungsform enthält die feuchtigkeitshärtende Zusammensetzung mindestens 0.5 Gewichts-%, besonders bevorzugt mindestens 0.7 Gewichts-%, Vinyltrimethoxysilan, bezogen auf die gesamte Zusammensetzung.

Bevorzugt wird ein Verfahren zur Herstellung einer erfindungsgemässen feuchtigkeitshärtenden Zusammensetzung, bei welchem die Feststoffkomponenen, wie Füllstoffe und Pigmente, welche erfahrungsgemäss signifikante Spuren von Feuchtigkeit enthalten, mit dem Vinyltrimethoxysilan in Kontakt gebracht werden, bevor die Zugabe des Silans (I) erfolgt.

Die beschriebene feuchtigkeitshärtende Zusammensetzung wird unter Ausschluss von Feuchtigkeit aufbewahrt. Sie ist lagerstabil, d.h. sie kann unter Ausschluss von Feuchtigkeit in einer geeigneten Verpackung oder Anordnung, wie beispielsweise einem Fass, einem Beutel oder einer Kartusche, über einen Zeitraum von mehreren Monaten bis zu einem Jahr und länger aufbewahrt werden, ohne dass sie sich in ihren Anwendungseigenschaften oder in ihren Eigenschaften nach der Aushärtung in einem für ihren Gebrauch relevanten Ausmass verändert.

Bei der Applikation der beschriebenen feuchtigkeitshärtenden Zusammensetzung wird die Oberfläche mindestens eines beliebigen Festkörpers oder Artikels teilweise oder vollständig mit der Zusammensetzung kontaktiert. Bevorzugt ist eine gleichmässige Kontaktierung in Form eines Klebstoffs oder einer Dichtmasse, einer Beschichtung oder eines Belags. Es kann durchaus vorkommen, dass der oder die zu kontaktierende Festkörper oder Artikel vor dem Kontaktieren einer physikalischen und / oder chemischen Vorbehandlung unterzogen werden muss, beispielsweise durch Schleifen, Sandstrahlen, Bürsten oder dergleichen, oder durch Behandeln mit Reinigem, Lösemitteln, Haftvermittlern, Haftvermittlerlösungen oder Primern, oder dem Aufbringen einer Haftbrücke oder eines Sealers.

Bei der Applikation der beschriebenen feuchtigkeithärtenden Zusammensetzung auf mindestens einen Festkörper oder Artikel kommen die Silangruppen des Polymers und der Silane in Kontakt mit Feuchtigkeit. Die Silangruppen haben die Eigenschaft, bei Kontakt mit Feuchtigkeit zu hydrolysieren. Dabei bilden sich Organosilanole (Silicium-rganische Verbindungen enthaltend eine oder mehrere Silanolgruppen, Si-OH-Gruppen) und, durch nachfolgende Kondensationsreaktionen, Organosiloxane (Silicium-organische Verbindungen enthaltend eine oder mehrere Siloxangruppen, Si-O-Si-Gruppen). Als Ergebnis dieser Reaktionen härtet die Zusammensetzung schliesslich aus; dieser Prozess wird auch als Vernetzung bezeichnet. Das für die Aushärtungsreaktion benötigte Wasser kann entweder aus der Luft stammen (Luftfeuchtigkeit), oder aber die Zusammensetzung kann mit einer Wasser enthaltenden Komponente in Kontakt gebracht werden, zum Beispiel durch Bestreichen, beispielsweise mit einem Abglättmittel, oder durch Besprühen, oder es kann der Zusammensetzung bei der Applikation eine Wasser enthaltende Komponente zugesetzt werden, zum Beispiel in Form einer wasserhaltigen Paste, die, beispielsweise über einen Statikmischer, eingemischt wird.

Die beschriebene feuchtigkeitshärtende Zusammensetzung weist im ausgehärteten Zustand eine überraschend hohe Dehnbarkeit auf und verfügt gleichzeitig über eine gute Lagerstabilität, eine hohe Reaktivität, gute Haftungseigenschaften und eine hohe Reissfestigkeit. Gegenüber einer analogen Zusammensetzung, welche kein Silan der Formel (I) enthält, hat sie eine signifikant höhere Dehnbarkeit, bei ansonsten vergleichbar guten Eigenschaften.

Ueberraschenderweise wurde gefunden, dass die Dehnbarkeit einer feuchtigkeitshärtenden Zusammensetzung, welche ein silanfunktionelles Polymer A und ein Aminosilan **AS2,** wie beispielsweise N-(2-Aminoethyl)-3-aminopropyl-trimethoxysilan, enthält, durch die Mitverwendung von 0.6 - 5.0 Gewichtsteilen, bevorzugt 0.6 - 3.5 Gewichtsteilen eines Silans (I), bezogen auf 100 Gewichtsteile Polymer **A**, signifikant erhöht wird. Werden hingegen α-funktionelle Silane mit drei Alkoxygruppen am Silicium, wie sie in WO 03/014226 A1 in den Beispielen erwähnt sind, oder γ-funktionelle Organodialkoxysilane anstelle der in Formel (I) dargestellten α-funktionellen Organodialkoxysilane verwendet, so wird keine signifikante Erhöhung der Dehnbarkeit der Zusammensetzungen im ausgehärteten Zustand beobachtet.

Werden weniger als 0.6 Gewichtsteile eines Silans (I), bezogen auf 100 Gewichtsteile Polymer **A**, eingesetzt, so ist die Erhöhung der Dehnbarkeit zu schwach, um einen relevanten Einfluss auf die Eigenschaften eines elastischen Klebstoffs, einer elastischen Dichtmasse oder Beschichtung auszuüben. Werden mehr als 3.5 Gewichtsteile, insbesondere mehr als 5.0 Gewichtsteile eines Silans (I), bezogen auf 100 Gewichtsteile Polymer **A** eingesetzt, so wird die Dehnbarkeit im ausgehärteten Zustand nicht weiter erhöht; hingegen sinkt die Zugfestigkeit deutlich ab, was für einen Einsatz der beschriebenen Zusammensetzungen als elastischer Klebstoff, als elastische Dichtmasse oder Beschichtung unerwünscht ist.

Die beschriebene feuchtigkeitshärtende Zusammensetzung härtet bei Kontakt mit Feuchtigkeit schnell aus. Sie verfügt im ausgehärteten Zustand über eine hohe mechanische Festigkeit bei einer überraschend hohen Dehnbarkeit, sowie über gute Haftungseigenschaften. Sie eignet sich für die Anwendung als elastischer Klebstoff, als elastische Dichtmasse oder Beschichtung. Insbesondere geeignet ist sie für Anwendungen, welche hohe Anforderungen an die Dehnbarkeit stellen, bei gleichzeitig hohen Anforderungen an Festigkeit, Haftungseigenschaften und Reaktivität. Solche Anwendungen sind beispielsweise Klebstoffe, Dichtmassen oder Beschichtungen in der industriellen Fertigung oder Reparatur oder im Tief- oder Hochbau oder Innenausbau von Transportmitteln oder Bauwerken. Speziell erwähnt werden sollen Anwendungen als elastischer Klebstoff bei der Fertigung von Fahrzeugen zu Wasser oder zu Lande, bevorzugt Automobile, Busse, Lastkraftwagen, Züge oder Schiffe, sowie Anwendungen als elastische Dichtmasse bei der Fertigung von Transportmitteln oder Bauwerken.

Beim Einsatz der beschriebenen feuchtigkeitshärtenden Zusammensetzung als Klebstoff, Dichtmasse oder Beschichtung sind grundsätzlich verschiedene Verfahren anwendbar.

In einer Ausführungsform wird ein Verfahren der Verklebung von zwei Substraten **S1** und **S2** zur Verfügung gestellt, welches die folgenden Schritte umfasst:
- Applikation der Zusammensetzung auf die Oberfläche des Substrates **S1;**
- Kontaktieren der Oberfläche des Substrates **S2** mit der Zusammensetzung, welche auf dem Substrat **S1** angeordnet ist;
- und Aushärtung der Zusammensetzung durch Kontakt mit Feuchtigkeit.

Die Substrate **S1** und **S2** können hierbei gleich oder verschieden voneinander sein.

In einer weiteren Ausführungsform wird ein Verfahren des Abdichtens zur Verfügung gestellt, welches die folgenden Schritte umfasst:
- Applikation der Zusammensetzung zwischen die Oberflächen von zwei Substraten **S1** und **S2;**
- und Aushärtung der Zusammensetzung durch Kontakt mit Feuchtigkeit.

Die Substrate **S1** und **S2** können hierbei gleich oder verschieden voneinander sein.

In einer weiteren Ausführungsform wird ein Verfahren des Verklebens oder des Abdichtens zur Verfügung gestellt, bei welchem mindestens eines der Substrate **S1** oder **S2** - abgesehen von einer gegebenenfalls durchgeführten Reinigung mit einem Lösemittel - nicht mit einer chemischen oder physikochemischen Methode vorbehandelt wird. Insbesondere wird kein Primer appliziert.

In einer weiteren Ausführungsform wird ein Verfahren des Verklebens oder des Abdichtens zur Verfügung gestellt, bei welchem mindestens eines der Substrate **S1** oder **S2** ein Metall oder eine Metalllegierung, insbesondere Stahl, Aluminium, ein Buntmetall oder ein verzinktes Metall, ist.

Geeignete Substrate **S1** oder **S2** sind beispielsweise anorganische Substrate wie beispielsweise Glas, Glaskeramik, Beton, Mörtel, Backstein, Ziegel, Gips und Natursteine wie Granit oder Marmor; Metalle oder Legierungen wie Aluminium, Stahl, Buntmetalle, verzinkte Metalle; organische Substrate wie Holz, Kunststoffe wie PVC, Polycarbonate, PMMA, Polyester, Epoxidharze; beschichtete Substrate wie beispielsweise pulverbeschichtete Metalle oder Legierungen; sowie Farben und Lacke, insbesondere Automobildecklacke.

### Beispiele

### Beschreibung der Prüfmethoden

Die Zugfestigkeit, die Bruchdehnung, das E-Modul bei 0 - 5% Dehnung und die Spannung bei 100% Dehnung wurden bestimmt nach DIN EN 53504 (Zuggeschwindigkeit: 200 mm/min) an während 7 Tagen bei 23 °C und 50% relativer Luftfeuchtigkeit und anschliessend während 7 Tagen bei 40 °C ausgehärteten Filmen mit einer Schichtdicke von 2 mm.

Die Shore A-Härte wurde bestimmt nach DIN 53505.

Die Haftung auf V2A Stahl beziehungsweise auf eloxiertem Aluminium (kurz: Alu elox) wurde folgendermassen bestimmt: Ein Plättchen des entsprechenden Materials (V2A Stahl oder eloxiertes Aluminium) wurde mit Ethanol gereinigt und dann ohne weitere Vorbehandlung mit einer Raupe der zu prüfenden Zusammensetzung beschichtet. Das mit der Raupe beschichtete Plättchen wurde dann während 7 Tagen im Normklima (23±1 °C, 50±5% relative Luftfeuchtigkeit) gelagert, wobei die Zusammensetzung aushärtete. Zur Prüfung der Haftung wurde die ausgehärtete Raupe an einem Ende knapp über der Oberfläche des Plättchens (Klebefläche) eingeschnitten. Das eingeschnittene Ende der Raupe wurde von Hand festgehalten und dann vorsichtig und langsam, schälend in Richtung des anderen Raupenendes, von der Plättchenoberfläche gezogen. Wenn dabei die Haftung so stark war, dass das Raupenende beim Ziehen abzureissen drohte, wurde mittels eines Cutters ein Schnitt senkrecht zur Raupenziehrichtung bis auf die blanke Oberfläche des Plättchens angebracht und die Raupe so ein Stück weit abgelöst. Solche Schnitte wurden, wenn nötig, beim Weiterziehen im Abstand von 2 bis 3 mm wiederholt. Auf diese Weise wurde die gesamte Raupe vom Plättchen gezogen bzw. geschnitten. Die Haftung wurde mit "ja" bezeichnet, wenn mindestens 75% der Haftfläche kohäsiv abgelöst war. Mit "nein" wurde die Haftung bezeichnet, wenn höchstens 25% der Haftfläche kohäsiv abgelöst war, bzw. wenn praktisch die ganze Haftfläche adhäsiv abgelöst war, und mit "teilweise" wurde die Haftung bezeichnet, wenn ungefähr die Hälfte der Haftfläche kohäsiv abgelöst war.

### Verwendete Abkürzungen in den Tabellen

- Ref.: Referenz
- erf.: erfindungsgemäss
- Vgl.: Vergleich
- GT: Gewichtsteil
- A1120: Silquest^{®} A-1120 (GE Advanced Materials):N-(2-Aminoethyl)-3-amino- propyl-trimethoxysilan
- XL972: Geniosil^{®} XL 972 (Wacker):(N-Phenylaminomethyl)-dimethoxymethylsilan
- XL924: Geniosil^{®} XL 924 (Wacker):(N-Cyclohexylaminomethyl)-diethoxymethyl- silan
- XL65: Geniosil^{®} XL 65 (Wacker):N-(Dimethoxymethylsilytmethyl)-O-methyl- carbamat
- XL32: Geniosil^{®} XL 32 (Wacker):(Methacryloxymethyl)-dimethoxymethylsilan
- XL34: Geniosil^{®} XL 34 (Wacker): (Methacryloxymethyl)-diethoxymethylsilan
- XL926: Geniosil^{®} XL 926 (Wacker): (N-Cyclohexylarninomethyl)-triethoxysilan
- XL63: Geniosil^{®} XL 63 (Wacker): N-(Trimethoxysilylmethyl)-O-methylcarbamat
- XL33: Geniosil^{®} XL 33 (Wacker): (Methacryloxymethyl)-trimethoxysilan
- A2120: Silquest^{®} A-2120 (GE Advanced Materials): N-(2-Aminoethyl)-3-amino- propyl-dimethoxymethylsilan
- A1110: Silquest^{®} A-1110 (GE Advanced Materials):3-Aminopropyl-trimethoxysilan
- A1100: Silquest^{®} A-1100 (GE Advanced Materials): 3-Aminopropyl-triethoxysilan

### a) Herstellung der silanfunktionellen Polymere

### Polymer 1

Unter Stickstoffatmosphäre wurden 1000 g Polyol Acclaim^{®} 12200 (Bayer; low monol Polyoxypropylendiol, OH-Zahl 11.0 mg KOH/g, Wassergehalt ca. 0.02 Gewichts-%), 43.6 g Isophorondiisocyanat (IPDI; Vestanat^{®} IPDI, Degussa), 126.4 g Diisodecylphthalat (DIDP; Palatinol^{®} Z, BASF) und 0.12 g Di-n-butyl-zinndilaurat unter stetigem Rühren auf 90 °C aufgeheizt und auf dieser Temperatur belassen, bis der titrimetrisch bestimmte Gehalt an freien Isocyanatgruppen einen Wert von 0.63 Gewichts-% erreicht hatte. Anschliessend wurden 62.3 g N-(3-Trimethoxysilyl-propyl)-amino-bernsteinsäure-diethylester eingemischt und die Mischung während 4 Stunden bei 90 °C gerührt, bis kein freies Isocyanat mittels IR-Spektroskopie mehr nachgewiesen wurde. Das Produkt wurde auf Raumtemperatur abgekühlt und unter Ausschluss von Feuchtigkeit aufbewahrt (theoretischer Polymergehalt = 89.7%).

N-(3-Trimethoxysilyl-propyl)-amino-bernsteinsäure-diethylester wurde wie folgt hergestellt: 51.0 g 3-Aminopropyl-trimethoxysilan (Silquest^{®} A-1110, GE Advanced Materials) wurden vorgelegt. Unter gutem Rühren wurden bei Raumtemperatur langsam 49.0 g Maleinsäure-diethylester zugegeben und die Mischung während 8 Stunden bei Raumtemperatur gerührt.

### Polymer 2

Unter Stickstoffatmosphäre wurden 1000 g Acclaim^{®} 12200 (Bayer; low monol Polyoxypropylendiol, OH-Zahl 11.0 mg KOH/g, Wassergehalt ca. 0.02 Gewichts-%), 36.1 g Isophorondiisocyanat (IPDI; Vestanat^{®} IPDI, Degussa), 292.3 g Diisodecylphthalat (DIDP; Palabnol^{®} Z, BASF) und 0.23 g Di-n-butylzinn-dilaurat unter stetigem Rühren auf 90 °C aufgeheizt und auf dieser Temperatur belassen, bis der Gehalt an freien Isocyanatgruppen einen Wert von 0.33 Gewichts-% erreicht hatte. Anschliessend wurden 37.7 g N-(3-Trimethoxysilyl-propyl)-amino-bernsteinsäure-diethylester eingemischt und die Mischung während 4 Stunden bei 90 °C gerührt, bis kein freies Isocyanat mittels IR-Spektroskopie mehr nachgewiesen wurde. Das Produkt wurde auf Raumtemperatur abgekühlt und unter Ausschluss von Feuchtigkeit aufbewahrt (theoretischer Polymergehalt = 78.6%).

N-(3-Trimethoxysilyl-propyl)-amino-bernsteinsäure-diethylester wurde wie bei Polymer 1 beschrieben hergestellt.

### Polymer 3 (Vergleich)

Unter Stickstoffatmosphäre wurden 3085.8 g Acclaim^{®} 12200 (Bayer; low monol Polyoxypropylendiol, OH-Zahl 11.0 mg KOH/g, Wassergehalt ca. 0.02 Gewichts-%), 138.3 g 3-Isocyanatopropyl-trimethoxysilan (Geniosil^{®} GF 40, Wacker) und 0.23 g Di-n-butyl-zinndiiaurat unter stetigem Rühren auf 90 °C aufgeheizt und auf dieser Temperatur belassen, bis kein freies Isocyanat mittels IR-Spektroskopie mehr nachgewiesen wurde. Das Produkt wurde auf Raumtemperatur abgekühlt und unter Ausschluss von Feuchtigkeit aufbewahrt (theoretischer Polymergehalt = 100%).

### b) Herstellung von Klebstoffen

### Herstellung der Klebstoff-Grundformulierung 1 (G1)

In einem Vakuummischer wurden 3300 g Polymer 1, 1500 g Diisodecylphthalat (DIDP; Palatinol^{®} Z, BASF), 100 g Vinyltrimethoxysilan (Silquest^{®} A-171, GE Advanced Materials), 4500 g feinteilige beschichtete Kreide (Socal^{®} U1S2, Solvay, getrocknet), 250 g pyrogene Kieselsäure (Aerosil^{®} 200, Degussa, getrocknet) und 10 g Di-n-butyl-zinndilaurat zu einer homogenen Paste verarbeitet, welche unter Ausschluss von Feuchtigkeit aufbewahrt wurde.

### Herstellung der Klebstoff-Grundformulierung 3 (G2) (Vergleich)

In einem Vakuummischer wurden 3300 g Polymer 3, 1500 g Diisodecylphthalat (DIDP; Palatinol^{®} Z, BASF), 100 g Vinyltrimethoxysilan (Silquest^{®} A-171, GE Advanced Materials), 4500 g feinteilige beschichtete Kreide (Socal^{®} U1S2, Solvay, getrocknet), 250 g pyrogene Kieselsäure (Aerosil^{®} 200, Degussa, getrocknet) und 10 g Di-n-butyl-zinndilaurat zu einer homogenen Paste verarbeitet, welche unter Ausschluss von Feuchtigkeit aufbewahrt wurde.

### Herstellung der Klebstoffe

In einem Vakuummischer wurde die jeweilige Klebstoff-Grundformulierung mit den in den Tabellen 1 bis 4 angegebenen Silanen homogen vermischt und unter Ausschluss von Feuchtigkeit aufbewahrt.

### Beispiele K1 bis K10

Die Klebstoffe **K2** bis **K10,** dargestellt in Tabelle 1, enthalten jeweils denselben Anteil Diaminosilan Silquest^{®} A-1120, welches ein Aminosilan **AS2** ist, und aufsteigende Mengen an Geniosil^{®} XL 972, welches ein Silan nach Formel (I) ist. Der Referenz-Klebstoff **K1** enthält kein Silan (I).

**Tabelle 1 Klebstoffformulierungen.**

| | **K1** Ref. | **K2** Vgl. | **K3** erf. | **K4** erf. | **K5** erf. | **K6** erf. | **K7** erf. | **K8** Vgl. | **K9** Vgl. | **K10** Vgl. |
|---|---|---|---|---|---|---|---|---|---|---|
| Klebstoff- **G1** [GT] | 99 | 99 | 99 | 99 | 99 | 99 | 99 | 99 | 99 | 99 |
| A1120 [GT] | 1.0 | 1.0 | 1.0 | 1.0 | 1.0 | 1.0 | 1.0 | 1.0 | 1.0 | 1.0 |
| XL972 [GT] | - | 0.1 | 0.2 | 0.25 | 0.5 | 1.0 | 1.5 | 2.0 | 2.5 | 4.0 |
| GTSilan (I)/GT Polymer | - | 0.33/ 100 | 0.66/ 100 | 0.82/ 100 | 1.65/ 100 | 3.29/ 100 | 4.94/ 100 | 6.59/ 100 | 8.24/ 100 | 13.2/ 100 |
| | | | | | | | | | | |
| Zugfestigkeit [MPa] | 2.8 | 2.8 | 2.9 | 2.9 | 2.9 | 3.4 | 2.9 | 2.3 | 1.9 | 1.6 |
| Bruchdehnung [%] | 360 | 370 | 400 | 450 | 480 | 630 | 640 | 640 | 640 | 650 |
| E-Modul [Mpa] | 3.3 | 3.3 | 3.2 | 2.9 | 2.8 | 2.4 | 2.4 | 2.3 | 1.6 | 1.0 |
| Haftung V2A Stahl | ja | ja | ja | ja | ja | ja | ja | ja | ja | ja |

Die erfindungsgemässen Klebstoffe **K3** bis **K7** weisen mit aufsteigender Menge Geniosil^{®} XL 972 eine deutliche Erhöhung der Bruchdehnung gegenüber **K1** auf, wobei die Zugfestigkeiten mindestens so hoch oder höher sind als diejenige von **K1.** Der Vergleichs-Klebstoff **K2,** welcher weniger als 0.6 Gewichtsteile Geniosil^{®} XL 972 auf 100 Gewichtsteile Polymer **A** enthält, weist keine signifikant erhöhte Bruchdehnung auf. Die Vergleichs-Klebstoffe **K8** bis **K10,** welche mehr als 5.0 Gewichtsteile Geniosil^{®} XL 972 auf 100 Gewichtsteile Polymer **A** enthalten, weisen zwar auch eine hohe Bruchdehnung auf, die Zugfestigkeiten sind jedoch tiefer als beim Referenz-Klebstoff **K1,** was nicht erwünscht ist.

### Beispiele K13 und K14

Die Klebstoffe **K1, K5** und **K13** bis **K14,** dargestellt in Tabelle 2, enthalten verschiedene Klebstoff-Grundformulierungen, welche sich im wesentlichen durch das darin enthaltene Polymer unterscheiden. Die jeweiligen Referenz-Klebstoffe **K1,** und **K13** enthalten kein Silan der Formel (I), während die Klebstoffe **K5** und **K14** jeweils 0.5 Gewichtsteile Geniosil^{®} XL 972 enthalten. Das in der Klebstoff-Grundformulierung **G2** enthaltene Polymer 3 entspricht nicht einem silanfunktionellen Polymer **A.**

**Tabelle 2 Klebstoffformulierungen.**

| | **K1** Ref. | **K5** erf. | **K13** Ref. | **K14** Vgl. |
|---|---|---|---|---|
| Klebstoff-**G1** [GT] | 99 | 99 | - | - |
| Klebstoff-**G2** [GT] | - | - | 99 | 99 |
| A1120[GT] | 1.0 | 1.0 | 1.0 | 1.0 |
| XL 972 [GT] | - | 0.5 | - | 0.5 |
| | | | | |
| Zugfestigkeit [MPa] | 2.8 | 2.9 | 2.6 | 2.6 |
| Bruchdehnung [%] | 360 | 480 | 190 | 200 |
| E-Modul [MPa] | 3.3 | 2.8 | 5.7 | 5.0 |
| Haftung V2A Stahl | ja | ja | ja | ja |

Aus den Resultaten der Tabelle 2 ist ersichtlich, dass die Bruchdehnung des erfindungsgemässen Klebstoffs **K5** deutlich höher ist als diejenige des Referenz-Klebstoffs **K1**, während die Zugfestigkeiten mindestens gleich hoch oder höher sind. Im nicht erfindungsgemässen Klebstoff **K14** enthaltend Polymer 3 bringt die Mitverwendung von Geniosil^{®} XL 972 gegenüber dem Referenz-Klebstoff **K13** praktisch keinen Anstieg der Bruchdehnung.

### Beispiele K15 bis K20

. Die Beispiele **K15** bis **K20** sind in Tabelle 3 dargestellt. Die Referenz-Klebstoffe **K1, K15** und **K16** enthalten kein Silan der Formel (I), wobei **K15** ebenfalls kein Aminosilan **AS2** enthält. Die Klebstoffe **K5** und **K17** bis **K20** enthalten je 0.5 Gewichtsteile eines Silans der Formel (I), wie in Tabelle 3 angegeben.

**Tabelle 3 Klebstoffformulierungen.**

| | **K15** Ref. | **K1** Ref. | **K16** Ref. | **K5** erf. | **K17** erf. | **K18** erf. | **K19** erf. | **K20** erf. |
|---|---|---|---|---|---|---|---|---|
| Klebstoff-**G1** [GT] | 99 | 99 | 99 | 99 | 99 | 99 | 99 | 99 |
| A1120 [GT] | - | 1.0 | 1.5 | 1.0 | 1.0 | 1.0 | 1.0 | 1.0 |
| Silan (0.5 GT) | - | - | - | XL972 | XL924 | XL65 | XL32 | XL34 |
| | | | | | | | | |
| Zugfestigkeit [MPa] | 2.7 | 2.8 | 2.8 | 2.9 | 3.2 | 3.0 | 2.9 | 3.1 |
| Bruchdehnung [%] | 590 | 360 | 290 | 480 | 510 | 430 | 440 | 470 |
| E-Modul [MPa] | 1.9 | 3.3 | 3.6 | 2.8 | 3.0 | 3.1 | 3.0 | 2.9 |
| Haftung V2A Stahl | nein | ja | ja | ja | ja | ja | ja | ja |

Die Resultate der Tabelle 3 zeigen, dass die erfindungsgemässen Klebstoffe **K5** und **K17** bis **K20** deutlich höhere Bruchdehnungen aufweisen als die Referenz-Klebstoffe **K1** und **K16,** während die Zugfestigkeiten entweder vergleichbar hoch oder höher sind. Der Referenz-Klebstoff **K15,** welcher kein Diaminosilan Silquest^{®} A-1120 (= Aminosilan **AS2**) enthält, weist zwar auch eine hohe Bruchdehnung auf; seine Haftungseigenschaften sind jedoch unbefriedigend.

### Beispiele K21 bis K26 (Vergleiche)

Im Vergleichsbeispielen **K21** bis **K26** wurden Silane zur Klebstoff-Grundformulierung **G1** zugesetzt, welche nicht der Formel (I) entsprechen. Die Zusammensetzungen und Resultate sind in Tabelle 4 dargestellt.

**Tabelle 4 Vergleichs-Klebstoffformulierungen.**

| | **K1** Ref. | **K21** Vgl. | **K22** Vgl. | **K23** Vgl. | **K24** Vgl. | **K25** Vgl. | **K26** Vgl. |
|---|---|---|---|---|---|---|---|
| Klebstoff-**G1** [GT] | 99 | 99 | 99 | 99 | 99 | 99 | 99 |
| A1120 [GT] | 1.0 | 1.0 | 1.0 | 1.0 | 1.0 | 1.0 | 1.0 |
| Silan (0.5 GT) | - | XL926 | XL63 | XL33 | A2120 | A1110 | A1100 |
| | | | | | | | |
| Zugfestigkeit [MPa] | 2.8 | 2.9 | 2.9 | 2.8 | 2.8 | 2.1 | 2.4 |
| Bruchdehnung [%] | 360 | 380 | 390 | 380 | 330 | 190 | 270 |
| E-Modul [MPa] | 3.3 | 3.5 | 3.3 | 3.4 | 3.8 | 3.6 | 3.7 |
| Haftung V2A Stahl | ja | ja | ja | ja | teilweise | ja | ja |

In Tabelle 4 zeigen die Resultate der Vergleichs-Klebstoffe **K21** bis **K26** Bruchdehnungen, die deutlich tiefer sind als die Bruchdehnungen der erfindungsgemässen Klebstoffe **K5** und **K17** bis **K20** aus Tabelle 3. Gegenüber dem Referenz-Klebstoff **K1** sind die Bruchdehnungen von **K21** bis **K23,** welche α-funktionelle Trialkoxysilane enthalten, nicht signifikant erhöht. Die Beispiele **K24** bis **K26** enthalten γ-funktionelle Organodialkoxysilane und weisen tiefere Bruchdehnungen auf als der Referenz-Klebstoff **K1.**

### c) Herstellung von Dichtmassen

### Herstellung der Dichtmassen-Grundformulierung (G3)

In einem Vakuummischer wurden 2800 g Polymer 2, 1300 g Diisodecylphthalat (DIDP; Palatinol^{®} Z, BASF), 800 g Harnstoff-Verdickungsmittel, 100 g Vinyltrimethoxysilan (Silquest^{®} A-171, GE Advanced Materials), 4350 g feinteilige beschichtete Kreide (Socal^{®} U1S2, Solvay, getrocknet), 600 g Silikonöl (Dow Corning 200 Fluid, Dow Corning) und 6 g Di-n-butyl-zinndilaurat zu einer homogenen Paste verarbeitet, welche unter Ausschluss von Feuchtigkeit aufbewahrt wurde.

Das Hamstoff-Verdickungsmittel wurde wie folgt hergestellt:
In einem Vakuummischer wurden 3000 g Diisodecylphthalat (DIDP; Palatinol^{®} Z, BASF) und 480 g 4,4'-Methylendiphenyldiisocyanat (Desmodur^{®} 44 MC L, Bayer) vorgelegt und leicht aufgewärmt. Dann wurden unter starkem Rühren 270 g Monobutylamin langsam zugetropft. Die entstehende Paste wurde unter Vakuum und Kühlung eine Stunde weitergerührt.

### Beispiele D1 bis D9

In einem Vakuummischer wurde die Dichtmassen-Grundformulierung G3 jeweils mit den in Tabelle 5 angegebenen Silanen homogen vermischt und unter Ausschluss von Feuchtigkeit aufbewahrt.

**Tabelle 5 Dichtstoffformulierungen.**

| | **D1** Ref. | **D2** Ref. | **D3** Ref. | **D4** erf. | **D5** erf. | **D6** erf. | **D7** erf. | **D8** erf. | **D9** Vgl. |
|---|---|---|---|---|---|---|---|---|---|
| Dichtmasse- **G3** [GT] | 99.3 | 99.3 | 99.3 | 99.3 | 99.3 | 99.3 | 99.3 | 99.3 | 99.3 |
| A1120 [GT] | - | 0.35 | 0.7 | 0.35 | 0.35 | 0.35 | 0.35 | 0.35 | 0.35 |
| Silan (0.35 GT) | - | - | - | XL 972 | XL 924 | XL65 | XL32 | XL34 | A 2120 |
| | | | | | | | | | |
| Zugfestigkeit [MPa] | 1.8 | 1.6 | 1.2 | 1.6 | 1.4 | 1.7 | 1.5 | 1.8 | 1.4 |
| Bruchdehnung [%] | 980 | 750 | 600 | 910 | 1100 | 940 | 910 | 1050 | 700 |
| Spannung bei100% Dehn. [MPa] | 0.33 | 0.35 | 0.36 | 0.33 | 0.25 | 0.39 | 0.31 | 0.33 | 0.41 |
| Shore A | 13 | 23 | 23 | 20 | 16 | 22 | 15 | 18 | 24 |
| Haftung Alu elox | nein | teilweise | ja | ja | ja | ja | teilweise | ja | ja |

Die Referenz-Dichtmassen **D1** bis **D3** enthalten kein Silan (I). Die Dichtmassen **D4** bis **D8** enthalten je 0.35 Gewichtsteile eines Silans der Formel (I). Die Vergleichs-Dichtmasse **D9** enthält Silquest^{®} A-2120, welches nicht der Formel (I) entspricht.

Die Resultate zeigen, dass für die erfindungsgemässen Dichtmassen **D4** bis **D8** Bruchdehnungswerte gemessen werden, welche deutlich höher liegen als jene für die Referenz-Dichtmassen **D2** und **D3** und für die Vergleichs-Dichtmasse **D9.** Die Referenz-Dichtmasse **D1,** welche kein Diaminosilan Silquest^{®} A-1120 (= Aminosilan **AS2**) enthält, weist zwar auch eine hohe Bruchdehnung auf; ihre Haftungseigenschaften sind jedoch unbefriedigend.

## Patentansprüche

1. Feuchtigkeitshärtende Zusammensetzung umfassend
mindestens ein silanfunktionelles Polymer **A,** welches
ein Polymer **A1** ist, welches durch die Umsetzung eines Isocyanatgruppen enthaltenden Polyurethanpolymers mit einem Aminosilan **AS1** hergestellt wird,
mindestens ein Aminosilan **AS2** und
mindestens ein Silan der Formel (I) in einer Menge von 0.6 - 5.0 Gewichtsteilen, bezogen auf 100 Gewichtsteile Polymer **A**, 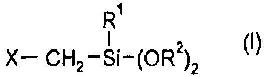 wobei
R¹ für eine Alkylgruppe mit 1 bis 8 C-Atomen, insbesondere für eine Methyl- oder für eine Ethylgruppe, steht,
R² für eine Alkylgruppe mit 1 bis 5 C-Atomen, insbesondere für eine Methylgruppe oder für eine Ethylgruppe oder für eine Isopropylgruppe, steht,
und
X für einen über ein Heteroatom gebundenen Substituenten steht,
wobei das Aminosilan **AS1** die Formel (III) aufweist, 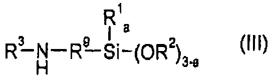 wobei
R¹ und R² die bereits beschriebene Bedeutung aufweisen,
a für 0 oder 1 steht,
R³ für ein Wasserstoffatom oder für einen linearen oder verzweigten Kohlenwasserstoffrest mit 1 bis 20 C-Atomen, welcher gegebenenfalls cyclische Anteile aufweist, oder für einen Rest der Formel (II) steht, 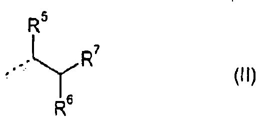 wobei
R⁵ und R⁶, unabhängig voneinander, für ein Wasserstoffatom oder für einen Rest aus der Gruppe umfassend R⁸, -COOR⁸ und -CN steht, und
R⁷ für ein Wasserstoffatom oder für einen Rest aus der Gruppe umfassend -CH₂COOR⁸, -COOR⁸, -CN, -NO₂, -PO(OR⁸)₂, -SO₂R⁸ und -SO₂OR⁸ steht,
wobei
R⁸ für für einen, gegebenenfalls mindestens ein Heteroatom enthaltenden, Kohlenwasserstoffrest mit 1 bis 20 C-Atomen steht, und
R⁹ für eine lineare oder verzweigte, gegebenenfalls cyclische, Alkylengruppe mit 2 bis 12 C-Atomen, gegebenenfalls mit aromatischen Anteilen, und gegebenenfalls mit einem oder mehreren Heteroatomen, insbesondere Stickstoffatomen, steht.

2. Feuchtigkeitshärtende Zusammensetzung gemäss Anspruch 1, **dadurch gekennzeichnet, dass** das Silan der Formel (I) in einer Menge von 0.6 - 3.5 Gewichtsteilen, bezogen auf 100 Gewichtsteile Polymer **A**, vorhanden ist.

3. Feuchtigkeitshärtende Zusammensetzung gemäss Anspruch 1 oder 2, **dadurch gekennzeichnet, dass** der über ein Heteroatom gebundene Substituent X ein Rest ausgewählt aus der Gruppe umfassend -NHR³, -NHCOOR⁴, -SH, -OR⁴, R⁴COO-, CH₂=C(CH₃)COO- und CH₂=CHCOO- ist, wobei
R³ für ein Wasserstoffatom oder für einen linearen oder verzweigten Kohlenwasserstoffrest mit 1 bis 20 C-Atomen, welcher gegebenenfalls cyclische Anteile aufweist, oder für einen Rest der Formel(II) steht 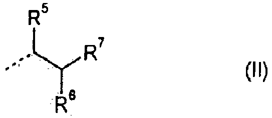 wobei
R⁵ und R⁶, unabhängig voneinander, für ein Wasserstoffatom oder für einen Rest aus der Gruppe umfassend R⁸, -COOR⁸ und -CN steht, und
R⁷ für ein Wasserstoffatom oder für einen Rest aus der Gruppe umfassend -CH₂-COOR⁸, -COOR⁸, -CN, -NO₂, -PO(OR⁸)₂, -SO₂R⁸ und -SO₂OR⁸ steht,
wobei
R⁸ für einen, gegebenenfalls mindestens ein Heteroatom enthaltenden, Kohlenwasserstoffrest mit 1 bis 20 C-Atomen steht,
und
R⁴ für einen, gegebenenfalls substituierten, Kohlenwasserstoffrest mit 1 bis 20 C-Atomen steht.

4. Feuchtigkeitshärtende Zusammensetzung gemäss Anspruch 1, 2 oder 3, **dadurch gekennzeichnet, dass** das Aminosilan **AS2** ein Diaminosilan mit einer primären Aminogruppe und in γ-Stellung zum Siliciumatom einer sekundären Aminogruppe ist.

5. Feuchtigkeitshärtende Zusammensetzung gemäss Anspruch 4, **dadurch gekennzeichnet, dass** das Aminosilan **AS2** ein N-(2-Aminoethyl)-3-aminopropylsilan, insbesondere N-(2-Aminoethyl)-3-aminopropyl-trimethoxysilan oder N-(2-Aminoethyl)-3-aminopropyl-triethoxysilan, ist.

6. Feuchtigkeitshärtende Zusammensetzung gemäss einem der vorhergehenden Ansprüche, **dadurch gekennzeichnet, dass** das Aminosilan **AS2** in einer Menge von 0.1 - 5 Gewichts-%, bevorzugt 0.3 - 3 Gewichts-%, bezogen auf die gesamte Zusammensetzung vorhanden ist.

7. Feuchtigkeitshärtende Zusammensetzung gemäss einem der vorhergehenden Ansprüche, **dadurch gekennzeichnet, dass** das Aminosilan **AS1** ein Additionsprodukt aus 3-Aminopropyl-trimethoxysilan oder 3-Aminopropyl-dimethoxymethylsilan und Michaelakzeptoren wie Maleinsäure- und Fumarsäurediestern ist, insbesondere (3-Trimethoxysilyl-propylamino)-bernsteinsäuredimethyl- und -diethylester sowie (3-Triethoxysilylpropylamino)-bernsteinsäuredimethyl- und -diethylester.

8. Feuchtigkeitshärtende Zusammensetzung gemäss Anspruch 7, **dadurch gekennzeichnet, dass** R³ für einen Rest der Formel (II) steht, wobei R⁵ und R⁷ je für -COOR⁸, R⁶ für ein Wasserstoffatom und R⁸ für eine, gegebenenfalls verzweigte, Alkylgruppe mit 1 bis 8 C-Atomen stehen.

9. Feuchtigkeitshärtende Zusammensetzung gemäss Anspruch 8, **dadurch gekennzeichnet, dass** R⁹ für Propylen, R² für Methyl und a für 0 steht.

10. Feuchtigkeitshärtende Zusammensetzung gemäss einem der vorhergehenden Ansprüche, **dadurch gekennzeichnet, dass** das Aminosilan **AS1** nicht identisch mit dem Aminosilan **AS2** ist.

11. Feuchtigkeitshärtende Zusammensetzung gemäss einem der vorhergehenden Ansprüche, **dadurch gekennzeichnet, dass** die Zusammensetzung frei von Isocyanatgruppen ist.

12. Feuchtigkeitshärtende Zusammensetzung gemäss einem der vorhergehenden Ansprüche, **dadurch gekennzeichnet, dass** die Zusammensetzung Vinyltrimethoxysilan enthält.

13. Ausgehärtete Zusammensetzung, **dadurch gekennzeichnet, dass** eine feuchtigkeitshärtende Zusammensetzung gemäss einem der Ansprüche 1 bis 12 über eine Reaktion mit Wasser ausgehärtet worden ist.

14. Verwendung einer feuchtigkeitshärtenden Zusammensetzung gemäss einem der Ansprüche 1 bis 12 als Klebstoff, Dichtmasse oder Beschichtung.

15. Verwendung gemäss Anspruch 14 als Klebstoff, Dichtmasse oder Beschichtung in der industriellen Fertigung oder Reparatur oder im Tief- oder Hochbau oder Innenausbau von Transportmitteln oder Bauwerken.

16. Verfahren der Verklebung von Substraten **S1** und **S2** umfassend die Schritte
- Applikation einer Zusammensetzung gemäss einem der Ansprüche 1 bis 12 auf die Oberfläche des Substrates **S1,**
- Kontaktieren der Oberfläche des Substrates **S2** mit der Zusammensetzung, welche auf dem Substrat **S1** angeordnet ist,
- Aushärtung der Zusammensetzung durch Kontakt mit Feuchtigkeit,
wobei die Substrate **S1** und **S2** gleich oder verschieden voneinander sind.

17. Verfahren des Abdichtens umfassend die Schritte
- Applikation einer Zusammensetzung gemäss einem der Ansprüche 1 bis 12 zwischen die Oberflächen eines Substrates **S1** und eines Substrates **S2,**
- Aushärtung der Zusammensetzung durch Kontakt mit Feuchtigkeit,
wobei die Substrate **S1** und **S2** gleich oder verschieden voneinander sind.

18. Verfahren gemäss Anspruch 16 oder 17, **dadurch gekennzeichnet, dass** mindestens eines der Substrate **S1** oder **S2,** abgesehen von einer gegebenenfalls durchgeführten Reinigung mit einem Lösemittel, nicht mit einer chemischen oder physikochemischen Methode vorbehandelt wird, insbesondere, dass kein Primer appliziert wird.

19. Verfahren gemäss einem der Ansprüche 16 bis 18, **dadurch gekennzeichnet, dass** mindestens eines der Substrate **S1** oder **S2** ein Metall oder eine Metalllegierung, insbesondere Stahl, Aluminium, ein Buntmetall oder ein verzinktes Metall, ist.

20. Verklebter Artikel, welcher mittels einem Verfahren zur Verklebung gemäss Anspruch 16 oder 18 oder 19 hergestellt wird.

21. Verklebter Artikel gemäss Anspruch 20, **dadurch gekennzeichnet, dass** der Artikel ein Transportmittel, insbesondere ein Fahrzeug zu Wasser oder zu Lande, bevorzugt ein Automobil, ein Bus, ein Lastkraftwagen, ein Zug oder ein Schiff, oder ein Teil davon, ist.

22. Abgedichteter Artikel, welcher mittels einem Verfahren zur Abdichtung gemäss einem der Ansprüche 17 bis 19 hergestellt wird.

23. Abgedichteter Artikel gemäss Anspruch 22, **dadurch gekennzeichnet, dass** der Artikel ein Transportmittel oder ein Bauwerk ist.

## Claims

1. Moisture-curing composition comprising at least one silane-functional polymer **A** which
is a polymer **A1** prepared by reacting a polyurethane polymer containing isocyanate groups with an aminosilane **AS1,**
at least one aminosilane **AS2,** and
at least one silane of the formula (I) in an amount of 0.6 - 5.0 parts by weight, based on 100 parts by weight of polymer **A,** 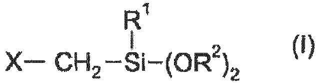 where
R¹ is an alkyl group having from 1 to 8 C atoms, more particularly a methyl or an ethyl group,
R² is an alkyl group having 1 to 5 C atoms, more particularly a methyl group or an ethyl group or an isopropyl group, and
X is a substituent attached via a heteroatom,
wherein the aminosilane **AS1** has the formula (III) 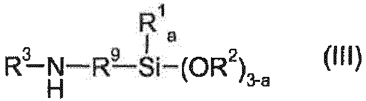 where
R¹ and R² have the definition already described,
a is 0 or 1,
R³ is a hydrogen atom or is a linear or branched hydrocarbon radical having 1 to 20 C atoms, which optionally contains cyclic fractions, or is a radical of the formula (II) 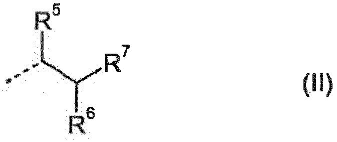 where
R⁵ and R⁶, independently of one another, is a hydrogen atom or is a radical from the group encompassing R⁸, -COOR⁸, and -CN, and
R⁷ is a hydrogen atom or is a radical from the group encompassing -CH₂COOR⁸, -COOR⁸, -CN, -NO₂, - PO (OR⁸)₂, -SO₂R⁸ and -SO₂OR⁸,
where
R⁸ is a hydrocarbon radical having 1 to 20 C atoms and optionally containing at least one heteroatom,
R⁹ is a linear or branched, optionally cyclic, alkylene group having 2 to 12 C atoms, optionally with aromatic fractions, and optionally with one or more heteroatoms, more particularly nitrogen atoms.

2. Moisture-curing composition according to Claim 1, **characterized in that** the silane of the formula (I) is present in an amount of 0.6 - 3.5 parts by weight, based on 100 parts by weight of polymer **A.**

3. Moisture-curing composition according to Claim 1 or 2, **characterized in that** the substituent X attached via a heteroatom is a radical selected from the group encompassing -NHR³, -NHCOOR⁴, -SH, -OR⁴, R⁴COO-, CH₂=C(CH3)COO-, and CH₂=CHCOO-,
where
R³ is a hydrogen atom or is a linear or branched hydrocarbon radical having 1 to 20 C atoms, which optionally contains cyclic fractions, or is a radical of the formula (II) 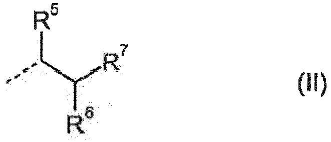
where
R⁵ and R⁶, independently of one another, is a hydrogen atom or is a radical from the group encompassing R⁸, -COOR⁸, and -CN, and
R⁷ is a hydrogen atom or is a radical from the group encompassing -CH2-COOR⁸, -COOR⁸, -CN, -NO₂, -PO (OR⁸)₂, -SO₂R⁸ and -SO₂OR⁸,
where
R⁸ is a hydrocarbon radical having 1 to 20 C atoms and optionally containing at least one heteroatom,
and
R⁴ is an optionally substituted hydrocarbon radical having 1 to 20 C atoms.

4. Moisture-curing composition according to Claim 1, 2 or 3, **characterized in that** the aminosilane **AS2** is a diaminosilane having a primary amino group and, in the position γ to the silicon atom, a secondary amino group.

5. Moisture-curing composition according to Claim 4, **characterized in that** the aminosilane **AS2** is an N-(2-aminoethyl)-3-aminopropylsilane, more particularly N-(2-aminoethyl)-3-aminopropyltrimethoxysilane or N-(2-aminoethyl)-3-aminopropyltriethoxysilane.

6. Moisture-curing composition according to any one of the preceding claims, **characterized in that** the aminosilane **AS2** is present in an amount of 0.1% - 5% by weight, preferably 0.3% - 3% by weight, based on the overall composition.

7. Moisture-curing composition according to any one of the preceding claims, **characterized in that** the aminosilane **AS1** is an addition product of 3-aminopropyltrimethoxysilane or 3-aminopropyldimethoxymethylsilane and Michael acceptors such as maleic diesters and fumaric diesters, more particularly dimethyl and diethyl (3-trimethoxysilylpropylamino)succinate and also dimethyl and diethyl (3-triethoxysilylpropyl-amino)succinate.

8. Moisture-curing composition according to Claim 7, **characterized in that** R³ is a radical of the formula (II), where R⁵ and R⁷ are each -COOR⁸, R⁶ is a hydrogen atom, and R⁸ is an optionally branched alkyl group having 1 to 8 C atoms.

9. Moisture-curing composition according to Claim 8, **characterized in that** R⁹ is propylene, R² is methyl, and a is 0.

10. Moisture-curing composition according to any one of the preceding claims, **characterized in that** the aminosilane **AS1** is not identical with the aminosilane **AS2.**

11. Moisture-curing composition according to any one of the preceding claims, **characterized in that** the composition is free from isocyanate groups.

12. Moisture-curing composition according to any one of the preceding claims, **characterized in that** the composition comprises vinyltrimethoxysilane.

13. Cured composition, **characterized in that** a moisture-curing composition according to any one of Claims 1 to 12 has been cured via a reaction with water.

14. Use of a moisture-curing composition according to any one of Claims 1 to 12 as an adhesive, sealant or coating.

15. Use according to Claim 14 as an adhesive, sealant or coating in industrial manufacture or repair or in civil engineering or construction or interior fitment of means of transport or built structures.

16. Method of adhesively bonding substrates **S1** and **S2,** comprising the steps of
- applying a composition according to any one of Claims 1 to 12 to the surface of the substrate **S1,**
- contacting the surface of the substrate **S2** with the composition which is disposed on the substrate **S1,**
- curing the composition by contact with moisture,
the substrates **S1** and **S2** being alike or different from one another.

17. Method of sealing comprising the steps of
- applying a composition according to any one of Claims 1 to 12 between the surfaces of a substrate **S1** and a substrate **S2,**
- curing the composition by contact with moisture,
the substrates **S1** and **S2** being alike or different from one another.

18. Method according to Claim 16 or 17, **characterized in that** at least one of the substrates **S1** or **S2,** apart from any cleaning carried out with a solvent, is not pretreated by a chemical or physicochemical method, more particularly **in that** no primer is applied.

19. Method according to any one of Claims 16 to 18, **characterized in that** at least one of the substrates, **S1** or **S2** is a metal or a metal alloy, more particularly steel, aluminium, a nonferrous metal or a galvanized metal.

20. Adhesively bonded article produced by means of a method of adhesive bonding according to Claim 16 or 18 or 19.

21. Adhesively bonded article according to Claim 20, **characterized in that** the article is a means of transport, more particularly a water or land vehicle, preferably an automobile, a bus, a truck, a train or a ship, or a part thereof.

22. Sealed article produced by means of a method of sealing according to any one of Claims 17 to 19.

23. Sealed article according to Claim 22, **characterized in that** the article is a means of transport or a built structure.

## Revendications

1. Composition durcissant à l'humidité et comprenant :
au moins un polymère A à fonctionnalité silane, qui
est un polymère A1 préparé en faisant réagir avec un aminosilane AS1 un polymère de polyuréthane contenant des groupes isocyanate,
au moins un aminosilane AS2 et
au moins un silane de formule (I) en quantité de 0,6 à 5,0 parties en poids par rapport à 100 parties en poids de polymère A, 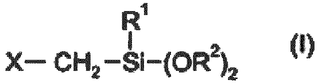 dans laquelle
R¹ représente un groupe alkyle comptant de 1 à 8 atomes de C et représente en particulier un groupe méthyle ou éthyle,
R² représente un groupe alkyle comptant de 1 à 5 atomes de C et représente en particulier un groupe méthyle, un groupe éthyle ou un groupe isopropyle et
X représente un substituant lié par l'intermédiaire d'un hétéroatome,
dans laquelle l'aminosilane AS1 présente la formule (III) 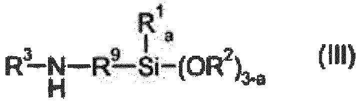 dans laquelle
R¹ et R² ont les significations données plus haut,
a représente 0 ou 1,
R³ représente un atome d'hydrogène ou un groupe hydrocarbure linéaire ou ramifié comptant de 1 à 20 atomes de C qui présente éventuellement les parties cycliques, ou un groupe de formule (II) 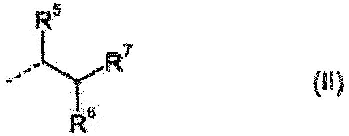
dans laquelle
R⁵ et R⁶ représentent indépendamment l'un de l'autre un atome d'hydrogène ou un groupe de l'ensemble comprenant R⁸, -COOR⁸ et -CN,
R⁷ représente un atome d'hydrogène ou un groupe de l'ensemble comprenant -CH₂COOR⁸, -COOR⁸, -CN, -NO₂, -PO(OR⁸)₂, -SO₂R⁸ et -SO₂OR⁸,
R⁸ représente un groupe hydrocarbure contenant éventuellement au moins un hétéroatome et comptant de 1 à 20 atomes de C et
R⁹ représente un groupe alkylène linéaire ou ramifié, éventuellement cyclique, comptant de 2 à 12 atomes de C, éventuellement avec des parties aromatiques et éventuellement avec un ou plusieurs hétéroatomes et en particulier des atomes d'azote.

2. Composition durcissant à l'humidité selon la revendication 1, **caractérisée en ce que** le silane de formule (I) est présent en quantité de 0,6 à 3,5 parties en poids par rapport à 100 parties en poids de polymère A.

3. Composition durcissant à l'humidité selon l'une des revendications 1 ou 2, **caractérisée en ce que** le substituant X lié par l'intermédiaire d'un hétéroatome est un groupe sélectionné dans l'ensemble qui comprend -NHR³, -NHCOOR⁴, -SH, -OR⁴, R⁴COO-, CH₂=C(CH₃)COO- et CH₂=CHCOO-,
dans lesquels
R³ représente un atome d'hydrogène ou un groupe hydrocarbure linéaire ou ramifié comptant de 1 à 20 atomes de C qui présente éventuellement des parties cycliques, ou un groupe de formule (II) 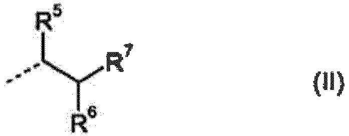 dans laquelle
R⁵ et R⁶ représentent indépendamment l'un de l'autre un atome d'hydrogène ou un groupe de l'ensemble comprenant R⁸, -COOR⁸ et -CN,
R⁷ représente un atome d'hydrogène ou un groupe de l'ensemble comprenant -CH₂-COOR⁸, -COOR⁸, -CN, -NO₂, -PO(OR⁸)₂, -SO₂R⁸ et -SO₂OR⁸,
R⁸ représente un groupe hydrocarbure contenant éventuellement au moins un hétéroatome et comptant de 1 à 20 atomes de C et
R⁴ représente un groupe hydrocarbure éventuellement substitué et comptant de 1 à 20 atomes de C.

4. Composition durcissant à l'humidité selon les revendications 1, 2 ou 3, **caractérisée en ce que** l'aminosilane AS2 est un diaminosilane doté d'un groupe amino primaire et un groupe amino secondaire en position γ par rapport à l'atome de silicium.

5. Composition durcissant à l'humidité selon la revendication 4, **caractérisée en ce que** l'aminosilane AS2 est un N-(2-aminoéthyl)-3-aminopropylsilane et en particulier le N-(2-aminoéthyl)-3-aminopropyl-triméthoxysilane ou le N-(2-aminoéthyl)-3-aminopropyl-triéthoxysilane.

6. Composition durcissant à l'humidité selon l'une des revendications précédentes, **caractérisée en ce que** l'aminosilane AS2 est présent en quantité de 0,1 à 5 parties en poids et de préférence de 0,3 à 3 parties en poids par rapport à la composition totale.

7. Composition durcissant à l'humidité selon l'une des revendications précédentes, **caractérisée en ce que** l'aminosilane AS1 est un produit d'addition de 3-aminopropyl-triméthoxysilane ou de 3-aminopropyl-diméthoxyméthylsilane et d'accepteurs de Michael, par exemple des diesters d'acide maléique ou d'acide fumarique, en particulier le diméthylester et le diéthylester d'acide (3-triméthoxysilyl-propylamino)-succinique ainsi que le diméthylester et le diéthylester d'acide (3-triéthoxysilyl-propylamino)-succinique.

8. Composition durcissant à l'humidité selon la revendication 7, **caractérisée en ce que** R³ représente un groupe de formule (II) dans laquelle R⁵ et R⁷ représentent tous deux -COOR⁸, R⁶ représente un atome d'hydrogène et R⁸ représente un groupe alkyle, éventuellement ramifié, qui compte de 1 à 8 atomes de C.

9. Composition durcissant à l'humidité selon la revendication 8, **caractérisée en ce que** R⁹ représente le propylène, R² le méthyle et A représente 0.

10. Composition durcissant à l'humidité selon l'une des revendications précédentes, **caractérisée en ce que** l'aminosilane AS1 n'est pas identique à l'aminosilane AS2.

11. Composition durcissant à l'humidité selon l'une des revendications précédentes, **caractérisée en ce que** la composition ne présente pas de groupe isocyanate.

12. Composition durcissant à l'humidité selon l'une des revendications précédentes, **caractérisée en ce que** la composition contient du vinyltriméthoxysilane.

13. Composition durcie, **caractérisée en ce qu'**une composition durcissant à l'humidité selon l'une des revendications 1 à 12 a été durcie par réaction avec l'eau.

14. Utilisation d'une composition durcissant à l'humidité selon l'une des revendications 1 à 12 comme adhésif, pâte d'étanchéité ou revêtement.

15. Utilisation selon la revendication 14 comme adhésif, pâte d'étanchéité ou revêtement dans la fabrication industrielle, la réparation, la construction souterraine, la construction en hauteur ou l'équipement intérieur de moyens de transport ou d'ouvrages de construction.

16. Procédé de collage de substrats S1 et S2, comprenant les étapes qui consistent à :
- appliquer une composition selon l'une des revendications 1 à 12 sur la surface du substrat S1,
- mettre la surface du substrat S2 en contact avec la composition disposée sur le substrat S1,
- laisser durcir la composition par contact avec l'humidité,
les substrats S1 et S2 étant identiques entre eux ou différents l'un de l'autre.

17. Procédé de fermeture étanche, comprenant les étapes qui consistent à :
- appliquer une composition selon l'une des revendications 1 à 12 entre la surface d'un substrat S1 et celle d'un substrat S2,
- laisser durcir la composition par contact avec l'humidité,
les substrats S1 et S2 étant identiques l'un à l'autre ou différents l'un de l'autre.

18. Procédé selon les revendications 16 ou 17, **caractérisé en ce qu'**à l'exception d'un nettoyage éventuellement réalisé à l'aide d'un solvant, au moins l'un des substrats S1 ou S2 n'est pas prétraité à l'aide d'une méthode chimique ou physicochimique, et en particulier **en ce qu'**aucune couche de fond n'est appliquée.

19. Procédé selon l'une des revendications 16 à 18, **caractérisé en ce qu'**au moins l'un des substrats S1 ou S2 est un métal ou un alliage de métaux, en particulier l'acier, l'aluminium, un métal non ferreux ou un métal zingué.

20. Objet collé fabriqué au moyen d'un procédé de collage selon les revendications 16, 18 ou 19.

21. Objet collé selon la revendication 20, **caractérisé en ce que** l'objet est un moyen de transport, en particulier un véhicule aquatique ou terrestre, de préférence une automobile, un autobus, un camion, un train ou un navire, ou une de leurs parties.

22. Objet fermé hermétiquement, fabriqué à l'aide d'un procédé de fermeture hermétique selon l'une des revendications 17 à 19.

23. Objet fermé hermétiquement selon la revendication 22, **caractérisé en ce que** l'objet est un moyen de transport ou un ouvrage de construction.
